# EUROPÄISCHE PATENTSCHRIFT

(11) **EP 2 638 965 B1**
(45) Veröffentlichungstag und Bekanntmachung des Hinweises auf die Patenterteilung: **01.09.2021**
(21) Anmeldenummer: 13158744.6
(22) Anmeldetag: 12.03.2013
(51) Int. Cl.: B01J 19/12, B01J 3/00, B01J 3/03, B01L 3/00, H05B 6/80

(54) **Druckbehälter**
Pressure vessel
Récipient sous pression

(30) Priorität: 14.03.2012 DE 202012004800 U
(43) Veröffentlichungstag der Anmeldung: 18.09.2013
(73) Patentinhaber: MLS Mikrowellen-Labor-Systeme GmbH, 88299 Leutkirch (DE)
(72) Erfinder: Lautenschläger, Werner, 9435 Heerbrugg (CH); Lautenschläger, Jens, 9435 Heerbrugg (CH)
(74) Vertreter: Kiwit, Benedikt

(56) Entgegenhaltungen:
- EP-A2- 2 371 447
- DE-A1-102007 055 548
- DE-U1-202011 105 285
- US-A- 5 725 835
- US-A1- 2003 106 891
- None

## Beschreibung

Die vorliegende Erfindung betrifft einen Druckbehälter zur Aufnahme von mittels Mikrowellen zu beheizenden Proben.

Druckbehälter der eingangs genannten Art sind aus dem Stand der Technik grundsätzlich bekannt. Um die Mikrowellen in eine die Proben aufnehmende Reaktionskammer einzukoppeln, ist in der Regel eine Koppelöffnung im Druckbehälter vorgesehen, über die bspw. mittels einer Antenne die von einem Mikrowellengenerator erzeugten Mikrowellen eingekoppelt werden. Die Koppelöffnung bildet den Schwachpunkt des Druckbehälters, da in diesem Bereich funktionsbedingt keine metallische Druckbehälterwand vorgesehen ist. Die DE 20 2011 105 285 U1 offenbart einen Druckbehälter mit einem infrarotdurchlässigen Druckaufnahmeteil.

Es ist somit eine Aufgabe der Erfindung, einen Druckbehälter der eingangs genannten Art bereitzustellen, mit dem eine Druckreaktion in einem breiten und insbesondere auch hohen Temperatur- und Druckbereich sicher und einfach durchführbar ist.

Gemäß der Erfindung ist ein Druckbehälter zur Aufnahme von zu beheizenden Proben bereitgestellt, wobei der Druckbehälter eine (vorzugsweise wahlweise) verschließbare Reaktionskammer als Druckraum zum Auslösen und/oder Fördern chemischer und/oder physikalischer Druckreaktionen aufweist, und wobei der Druckbehälter eine Koppelöffnung sowie einen Mikrowellen-durchlässigen Bereich zwischen der Koppelöffnung und der Reaktionskammer aufweist, über die Mikrowellen in die Reaktionskammer eingekoppelt werden können. Der Mikrowellen-durchlässigen Bereich weist erfindungsgemäß ein Druckaufnahmeteil auf bzw. ist durch das Druckaufnahmeteil gebildet, um den Druck der Reaktionskammer gegenüber der Koppelöffnung abzustützen.

Auf diese Weise ist es möglich, die Vorrichtung in einem großen Druckbereich (bspw. von 5bar bis über 400bar) zu betreiben, wobei der in der Reaktionskammer auftretende Druck mittels des Druckaufnahmeteils über die Druckbehälterwand aufgenommen und somit gegenüber der Koppelöffnung und ggf. etwaigen Abstrahlelementen eines Mikrowellengenerators (bspw. einer Antenne, welche vorzugsweise von einem hochtemperaturbeständigem Material (z.B. PTFE, Keramik) umgeben ist abgestützt wird.

Dies wiederum hat eine verlängerte Lebensdauer der gesamten Vorrichtung zur Folge. Vorzugsweise ist hierzu ferner das Druckaufnahmeteil lösbar in dem Druckbehälter vorgesehen, so dass es bei Verschleiß oder Zerstörung einfach, schnell und kostengünstig ausgetauscht werden kann.

Das Druckaufnahmeteil kann aus einem vorzugsweise keramischen und chemikalienbeständigen Material bestehend aus Aluminiumoxid, Saphir, Kalziumfluorid, Quarz oder Keramik gebildet sein, welches derart ausgebildet ist, dass die physikalischen Eigenschaften des Mikrowellen-durchlässigen Bereichs bezüglich Mikrowellentransparenz und Stabilität während einer Druckreaktion bzw. der Reaktionsdauer des Druckbehälters konstant gehalten werden.

Neben der zuvor beschriebenen Stützfunktion des Druckaufnahmeteils, welche eine höhere Lebensdauer des Druckbehälters zur Folge hat, kann ebenso durch die konstant gehaltene Mikrowellentransparenz über die Lebensdauer des Druckbehälters hinweg die gleichen Ergebnisse bei gleichen Einstellungen und Probenmaterialien erzielt werden. Auf diese Weise können etwaige Kalibriervorgänge vermieden und die Reaktionsdauer deutlich erhöht sowie die Ergebnisse verbessert und vereinheitlicht werden.

In einem Beispiel bildet das Druckaufnahmeteil den Boden. Das Druckaufnahmeteil bildet einen Teil des Bodens des Druckbehälters, sodass das Druckaufnahmeteil einen größeren Durchmesser als die Koppelöffnung aufweist und sich somit an dem Druckbehälter abstützt. Als solches kann der Druck der Reaktionskammer auf den Boden sicher aufgefangen und gegenüber der Koppelöffnung abgestützt werden.

Der Mikrowellen-durchlässige Bereich kann vollständig durch ein vorzugsweise keramisches und chemikalienbeständiges Material gebildet sein, welches wiederum den Boden des Druckbehälters bildet.

Dadurch, dass der Boden des Druckbehälters selbst durch das Druckaufnahmeteil gebildet wird, kann die Abstützung durch dasselbe in einfacher Weise durchgeführt werden, während der Aufbau des Druckbehälters einfach bleibt.

Das Druckaufnahmeteil weist vorzugsweise zwischen der Koppelöffnung und der Reaktionskammer eine Dicke von 10-60 mm, vorzugweise eine Dicke von 15-30 mm auf. Somit ist ein Druckaufnahmeteil bereitgestellt, welches einerseits eine kompakte Bauweise ermöglicht und zugleich eine ausreichende Stärke aufweist, um auch hohen Drücken (bspw. 50 bis über 400bar) standzuhalten und die Koppelöffnung sicher gegenüber dem Druck abzustützen.

Das Druckaufnahmeteil weist eine sich zwischen der Koppelöffnung und der Reaktionskammer in Mikrowelleneinkoppelrichtung erstreckende, durchgehende Öffnung auf, welche mit einem von dem Material des Druckaufnahmeteils sich unterscheidenden Material ausgefüllt ist. Besonders vorzugsweise bildet dieses Material eine (Material-)Säule im Druckaufnahmeteil. Vorzugsweise weist hierbei das die Öffnung ausfüllende Material des Druckaufnahmeteils die Mikrowellen verändernde oder optimierende Eigenschaften auf. Ferner weist das die Öffnung ausfüllende Material des Druckaufnahmeteils vorzugsweise im Wesentlichen den gleichen Ausdehnungskoeffizient wie das Material des Druckaufnahmeteils auf. Mittels der zuvor beschriebenen "Säule" können insbesondere in Ab- bzw. Durchstrahlrichtung der Mikrowellen durch das Mikrowellen-durchlässigen Druckaufnahmeteil die Mikrowellen in für die Druckreaktion vorteilhafter Weise angepasst bzw. optimiert werden. Ein ähnlicher bzw. identischer Ausdehnungskoeffizient der beiden Materialien ist dabei vorteilhaft, um auch bei Temperaturschwankungen und Temperaturanstiegen während einer Druckreaktion eine sichere und geschlossene Vorrichtung bereitzustellen, die gleichzeitig eine lange Lebensdauer aufgrund geringeren Verschleißes aufweist.

Vorzugsweise ist ein Dichtelement wenigstens zwischen dem Druckaufnahmeteil und der Innenwandung des Druckbehälters derart vorgesehen, dass die Koppelöffnung von der Reaktionskammer dichtend getrennt ist. Das Dichtelement ist vorzugsweise aus PTFE-Werkstoffen gebildet. In einer bevorzugten Ausgestaltungsform des Dichtelements weist dieses einen Deckel auf, welcher das Druckaufnahmeteil wenigstens teilweise umgibt. Auf diese Weise kann die Koppelöffnung bzw. ein darin angeordnetes Abstrahlelement sicher von der Druckreaktion sowie den darin befindlichen Proben(-materialien) abgeschirmt werden.

Vorzugsweise ist das Druckaufnahmeteil aus Aluminiumoxid, Saphir, Kalziumfluorid, Quarz oder Keramik hergestellt. Auf diese Weise wird ein temperaturbeständiges, hartes (kratzfestes), druckbeständiges und gegenüber Chemikalien beständiges Druckaufnahmeteil mit Mikrowellen-durchlässiger Eigenschaft zur Verfügung gestellt, welches ferner vorzugsweise lösbar vorgesehen und somit nach Bedarf austauschbar ist. Der Einsatz der vorgenannten Materialien hat insbesondere aufgrund seiner Chemikalienbeständigkeit den weiteren Vorteil, dass durch die als Proben eingesetzten Chemikalien keine Veränderungen an dem Material bewirken, wie es häufig bei Kunststoffen durch Diffusion von Gasen, Säuren oder Lösemitteln der Fall ist. Das verändert die Mikrowellen-Durchlässigkeit. Bei den erwähnten keramischen Werkstoffen bleibt die Mikrowellen-Transparenz des Druckaufnahmeteils während der Lebensdauer des Druckaufnahmeteils weitestgehend konstant, was zu gleichmäßigen Ergebnissen der Druckreaktionen führt.

Vorzugsweise weist der Druckbehälter einen Unterteil und einen Deckelteil auf, die miteinander verschließbar sind und im geschlossenen Zustand allseitig die Reaktionskammer umgeben. Auf diese Weise wird ein leicht zugänglicher und einfach zu handhabender Druckbehälter bereitgestellt, der gleichzeitig einen Faraday-Käfig bildet.

Vorzugsweise weist der Druckbehälter eine die Reaktionskammer umschließende, vorzugsweise herausnehmbare Isolationsauskleidung auf, die besonders vorzugsweise aus Kunststoff d.h. resistenten PTFE-Werkstoffen besteht. Die Isolationsauskleidung dient als Isolator des Druckbehälters gegenüber einer beheizten Probe. Neben der Verringerung der thermischen Belastung dient die Isolationsauskleidung ferner als Korrosionsschutz der Druckbehälterinnenwand sowie als Schutz der Druckbehälterinnenwand gegenüber einer chemischen Belastung durch die Probe.

Vorzugsweise weist der Druckbehälter eine die Reaktionskammer (wenigstens teilweise) umgebende Kühlanordnung derart auf, dass der Druckbehälter gleichzeitig beheizbar und kühlbar ist, wobei die Kühlanordnung vorzugsweise eine Durchflusskühlung ist und wenigstens einen Einlass und einen Auslass für ein Kühlmedium aufweist. Auf diese Weise kann eine thermische Beeinflussung und damit verbunden eine chemische Attacke des Druckbehälters verringert oder gar vermieden werden.

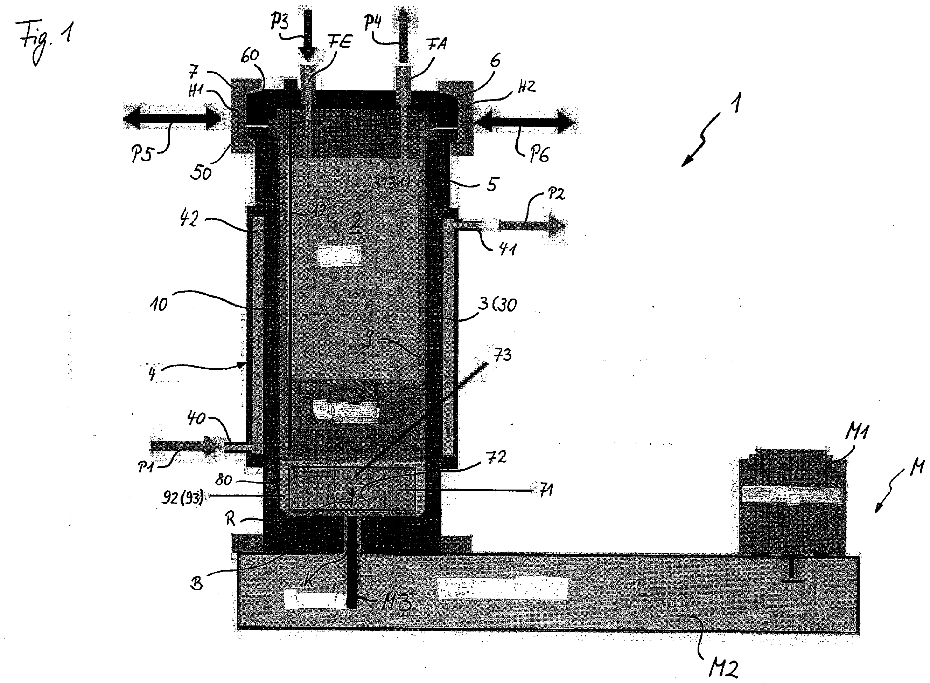

Weitere Ausgestaltungen und Vorteile der Erfindung werden im Folgenden anhand von einem Ausführungsbeispiel im Zusammenhang mit der Figur 1 der begleitenden Zeichnung beschrieben.

Die einzige Figur 1 zeigt eine beispielhafte Ausführungsform eines erfindungsgemäßen Druckbehälters 1 (im Folgenden auch als "Behälter" bezeichnet) zur Aufnahme von zu beheizenden Proben P zum Auslösen und/oder Fördern chemischer und/oder physikalischer Druckreaktionen an den Proben P. Hierbei kann es sich beispielsweise um einen (Hochdruck-)Autoklav handeln. Der Druckbehälter 1 besteht vorzugsweise aus einem hochdruckfesten Werkstoff wie beispielsweise Metall, vorzugsweise Stahl, besonders vorzugsweise einer korrosionsbeständigen Edelstahl-Legierung. Der Druckbehälter 1 ist dabei vorzugsweise derart ausgebildet, dass er bei Drücken bis zu wenigstes 200bar, vorzugsweise bis zu wenigstens 500bar, sowie bei Temperaturen von bis zu und auch über 300°C einsetzbar ist.

Der Druckbehälter 1 umgibt eine Reaktionskammer bzw. einen Druckraum 2 zum Auslösen und/oder Fördern der chemischen und/oder physikalischen Druckreaktionen an den Proben P. Die Probe (Proben) P ist zur Probenbehandlung in der Reaktionskammer 2 angeordnet und aus dieser vorzugsweise durch eine Öffnung entnehmbar. Die Reaktionskammer 2 ist folglich vorzugsweise wahlweise verschließbar, wie beispielhaft im Weiteren noch beschrieben wird.

Der Druckbehälter 1 weist ferner vorzugsweise eine die Reaktionskammer 2 umschließende Isolationsauskleidung 3 (einen sogenannten Liner) auf. Diese Isolationsauskleidung 3 besteht vorzugsweise aus Kunststoff, PTFE-Werkstoffen, Keramik oder Tantal (bei Einsatz von Chlor bzw. chloridhaltigen Chemikalien). Die Isolationsauskleidung 3 dient somit einerseits als Isolator des Druckbehälters 1 gegenüber der beheizten Probe P und dient andererseits, neben einer Verringerung der thermischen Belastung, als Korrosionsschutz der Druckbehälterinnenwand sowie als Schutz der Druckbehälterinnenwand gegenüber einer chemischen Belastung durch die Probe P. Die Isolationsauskleidung 3 weist beispielsweise eine Wandstärke von 2 bis 10mm auf, vorzugsweise 3 bis 6mm.

Ferner weist der Druckbehälter 1 vorzugsweise eine Kühlanordnung 4 auf, die derart angeordnet ist, dass sie die Reaktionskammer 2 wenigstens teilweise, vorzugsweise ganz umgibt und der Kühlkanal somit einen Kühlmantel 42 bildet. Vorzugsweise umgibt die Kühlanordnung 4 wenigstens den Bereich der Probenaufnahme des Druckbehälters 1. Der Bereich der Probenaufnahme ist dabei der Innenbereich der Reaktionskammer 2, in dem sich zur Probenreaktion die Probe P befindet; insbesondere handelt es sich dabei, wie auch bei der gezeigten Ausführungsform, um den unteren Bereich der Reaktionskammer 2. Vorzugsweise umgibt die Kühlanordnung 4 die Seitenwände 10 des Druckbehälters 1 über seine gesamte Länge, besonders vorzugsweise umgibt die Kühlanordnung 4 den gesamten Druckbehälter 1, insbesondere die Bereiche, an denen die Isolationsauskleidung 3 angeordnet ist. Auf diese Weise wird der Druckbehälter 1, der bei der Probenreaktion von innen mittels der beheizten Probe P erwärmt wird, gleichzeitig gekühlt, sodass die thermische und chemische Belastung des Druckbehälters 1 entsprechend reguliert und beispielsweise unterhalb einer vorbestimmten Temperatur gehalten werden kann. Beispielsweise kann bei Verwendung einer nur 5mm starken bzw. dünnen Isolationsauskleidung 3 auf einfache Weise ein Temperaturgradient der Isolationsauskleidung 3 von 300°C zu Raumtemperatur erzielt werden. Auf diese Weise kann durch die Kühlanordnung 4 der Druckbehälter 1 derart gekühlt werden, dass die Temperatur am Übergang zwischen Druckbehälterinnenwand und Isolationsauskleidung 3 auf Raumtemperatur bzw. einer beliebig vom Anwender vorbestimmten Temperatur gehalten wird. Während des Heizvorgangs wird lediglich die Energie zum Erreichen der entsprechenden Temperatur und danach die Energie, um den Wärmeverlust auszugleichen zugeführt. Ist die Temperatur des Druckbehälters 1 derart gering im Vergleich zu dem Probenraum bzw. der Reaktionskammer 2, also bspw. unter 100°C, vorzugsweise Raumtemperatur oder darunter, so wird auch eine Korrosion des Druckbehälters 1, bspw. aufgrund von aus der Reaktionskammer 2 durch die Isolationsauskleidung 3 diffundierende Moleküle/Gase (wie z.B. Säure- oder Lösemitteldämpfe) oder dergleichen, erheblich reduziert oder gänzlich verhindert. Dadurch wird die Lebensdauer des Druckbehälters 1 deutlich verlängert gegenüber einem Druckbehälter, der nur ungleichmäßig oder gar nicht gekühlt wird. Auf diese Weise können im Wesentlichen identische Bedingungen innerhalb der Reaktionskammer 2 erzielt werden, was wiederum zu einer schnelleren und genaueren Probenbehandlung führt.

Durch die identischen Bedingungen bei mehreren Proben in der Reaktionskammer 2 können alle Analyseverfahren beispielsweise durch den Einsatz interner Referenzstandards permanent einer analytischen Qualitätsüberwachung, z.B. dann auch mit einem Zertifikat, unterzogen werden.

Die erhitzte Probe P sowie die hohe Wellendichte (Intensität) durch die Mikrowellen, bspw. bei 1500W, erwärmt besagten Druckbehälter 1 aufgrund der Isolationsauskleidung 3 nur verzögert und/oder in abgeschwächter Form, im Vergleich zu einer Anordnung ohne Isolationsauskleidung, sodass die Druckbehälter 1 nur vergleichsweise geringen thermischen Einflüssen bzw. Unterschieden ausgesetzt sind.

Dies wird weiter dadurch positiv beeinflusst, dass der Druckbehälter 1 wenigstens in dem Bereich der Probenaufnahmen des Druckbehälters 1, vorzugsweise über den gesamten Bereich der Seitenwände des Druckbehälters 1, die ihn umgebende Kühlanordnung 4 aufweist, die den Druckbehälter 1 insbesondere in dem Bereich der größten Erwärmung gleichzeitig kühlt, und damit den thermischen Einflüssen der Probe P und der Heizung auf den Druckbehälter 1 entgegenwirkt. Auf diese Weise kann eine thermische Beeinflussung des Druckbehälters 1 verringert oder gar vermieden werden. Insbesondere wird der Druckbehälter 1 derart gekühlt, dass er einen vorbestimmten Temperaturschwellenwert nicht übersteigt. Dazu kann die Kühlung bei Erreichen einer bestimmten Temperatur des Druckbehälters 1 beginnen bzw. wieder abgestellt werden, oder die Druckbehälterwand wird vorzugsweise schon von Beginn des Heizvorgangs an und/oder permanent gekühlt. Bei permanenter Kühlung von Beginn des Heizvorganges an kann ein Überschreiten der Temperatur der Druckbehälterwand, bspw. von Raumtemperatur, frühzeitig vermieden werden. Es ist auch denkbar, dass der Behälter auf einer bestimmten Temperatur gehalten wird und die Kühlung erst später einsetzt oder vor Beendigung der Probenreaktion bereits abgestellt wird. Vorzugsweise wird jedoch die Kühlung bereits vor oder wenigstens von Beginn des Heizvorganges an begonnen und auch nach Beendigung des Heizvorganges fortgesetzt. Durch die rechtzeitige Einsetzung der Kühlung von Beginn an und permanent während des Versuchsablaufs wird ein Verschleiß des Druckbehälters 1 erheblich reduziert. Durch das weitere Kühlen nach Beendigung des Heizvorganges ist der Temperaturunterschied bzw. Temperaturgradient zwischen der Reaktionskammer 2 und dem Druckbehälter 1 (schlagartig) verringert, so dass eine besonders schnelle Abkühlung der Probe P trotz der Isolationsauskleidung 3 ermöglicht ist, während die Druckbehälterwand weiterhin auf einem konstant niedrigem Niveau gehalten wird. Somit wird auch während und nach dem Heizvorgang eine Korrosion des Druckbehälters 1 aufgrund stetig niedriger Temperaturen vermieden und dessen Lebensdauer erheblich verlängert.

Durch die direkte Beheizung der Probe P können somit extrem schnelle Heizraten erzielt werden. Durch die gleichzeitige Kühlung, vorzugsweise permanent und von Beginn an, wird zum einen die thermische Belastung des Druckbehälters 1 verringert, zum anderen kann gleichzeitig eine schnelle Abkühlung der Probe P nach durchgeführter Probenreaktion erzielt werden.

Die Kühlanordnung 4 weist vorzugsweise wenigstens einen Fluid-Einlass 40 und einen Fluid-Auslass 41 für ein Kühlmedium (vgl. Pfeile P1 und P2) auf, sodass sie als Durchflusskühlung bzw. Umlaufkühler oder Kreislaufkühler ausgebildet ist. Als Kühlmittel wird ein Fluid, vorzugsweise Luft oder ein flüssiges Kühlmittel, eingesetzt. Wenn die Temperatur des Druckbehälters 1 auf unter 100°C, vorzugsweise auf Zimmertemperatur gehalten werden soll, kann bspw. Wasser als Kühlmedium verwendet werden, welches insbesondere leicht verfügbar und preiswert ist. Zudem kann auch jedes andere, bekannte Kühlmedium verwendet werden, welches einen höheren (oder niedrigeren) Siedepunkt und/oder einen höheren (oder niedrigeren) Wärmegradienten als Wasser besitzt. Das Kühlmedium wird beispielsweise außerhalb des Druckbehälters 1 mittels einer Pumpenanordnung (nicht gezeigt) durch den Umlaufkühler 4 geleitet und wird mittels eines Kühlelements (nicht gezeigt), wie beispielsweise einem Wärmetauscher, gekühlt. Die Kühlanordnung 4 kann bspw. auch als (Durchlauf-Thermostat) Kryostat ausgebildet sein, wobei das Kühlmedium mit sehr niedrigen Temperaturen in das System eingeführt wird, um aufgrund der hohen Temperaturdifferenz eine Kühlung des Druckbehälters 1, bspw. auf Raumtemperatur, gegenüber der Reaktionskammer 2, bspw. auf 300°C erhitzt, zu erzielen. Insbesondere bei Einsatz einer Mikrowellen-Heizung kann, trotz der hohen Wellendichte in der Reaktionskammer 2, gegenüber klassischen Autoklaven eine entsprechende Kühlung und Schonung des Druckbehälters 1 erreicht werden. Der Druckbehälter 1 wird vor allem dadurch geschont, dass bspw. Korrosion aufgrund diffundierender Stoffe aus der Reaktionskammer 2 über die Isolationsauskleidung 3 bzw. -wand vermieden wird. Der Druckbehälter 1 besteht vorzugsweise aus einem (topfförmigen) Unterteil 5 und einem Deckelteil 6 (im Folgenden auch als "Deckel" bezeichnet), die miteinander verschließbar sind und im geschlossenen Zustand die Reaktionskammer 2 allseitig umgeben. Dabei verschließt der Deckel 6 die in dem Druckbehälter 1, also dem Unterteil 5 des Druckbehälters 1 vorgesehene Öffnung zum Einbringen und Entnehmen der Probe P. Die Erfindung ist jedoch nicht auf die vorgenannte Form beschränkt. Wenigstens der Unterteil 5 weist dabei die Isolationsauskleidung 3, 30 auf, vorzugsweise weist auch der Deckel 6 die Isolationsauskleidung 3, 31 auf.

Wie der Figur 1 zu entnehmen ist, weisen sowohl das Unterteil 5 also auch der Deckel 6 vorzugsweise miteinander korrespondierende Flanschbereiche 50, 60 auf. Mittels Haltemitteln 7, wie beispielsweise Klammern, die um die Flanschbereiche 50, 60 anlegbar und im geschlossenen Zustand angeordnet sind, werden das Unterteil 5 und der Deckel 6 derart gegeneinander gedrückt, dass der die Reaktionskammer 2 umgebende Druckbehälter 1 sicher verschlossen ist. Das oben beschriebene Haltemittel 7 weist beispielsweise zwei Klammerhälften H1, H2 auf, die zusammen eine im Wesentlichen kreisförmige Klammer bilden. Die Klammerhälften H1, H2 sind vorzugsweise über dieselbe Verschwenkachse derart schwenkbar (vgl. Doppelpfeile P5, P6), dass sie die Flanschbereiche 50, 60 wahlweise freigeben (der Behälter 1 kann dann bspw. durch Abheben des Deckels 6 vom Unterteil 5 geöffnet werden) oder umschließen (der Behälter 1 ist dann sicher verschlossen, wobei bspw. Deckel 6 und Unterteil 5 durch die Klammer gegeneinander gedrückt werden). In einem geschlossenen Zustand können die Klammerhälften H1, H2 bspw. mittels einer Schraube gegeneinander gesichert werden, so dass ein versehentliches Öffnen des Behälters 1 sicher vermieden werden kann.

In einer besonders bevorzugten Ausführungsform ist der Deckel 6 zu dem Unterteil 5 hin vorgespannt, vorzugsweise federvorgespannt, also unter Zuhilfenahme einer Federkraft verschlossen, um die geschlossene Reaktionskammer 2 zu bilden. Die (Feder-)Vorspannung ist dabei derart ausgebildet, dass sich der Deckel 6 und das Unterteil 5 bei Erreichen eines vorbestimmten Innendrucks innerhalb der Reaktionskammer 2 entgegen der Federvorspannung relativ voneinander weg bewegen. Auf diese Weise kann durch das sogenannte Abblasen, d.h., wenn sich aufgrund eines hohen Innerdrucks der vorgespannte Deckel 6 (leicht) abhebt, der vorbestimmte Innendruck nicht überstiegen werden. Somit wird ein überhöhter Innendruck, der zu einer Beschädigung des Druckbehälters 1 führen könnte, vermieden. Des Weiteren können auf diese Weise durch vorbestimmte Druckverhältnisse in der Reaktionskammer 2 auch vorbestimmte Reaktionsbedingungen sicher bereitgestellt werden.

In einer besonders bevorzugten Ausführungsform ist zwischen dem Deckel 6 und dem Unterteil 5, vorzugsweise zwischen dem Deckel 6 und der Isolationsauskleidung 3, 30 des Unterteils 5, eine Dichtung (nicht gezeigt) vorgesehen, die im geschlossenen, also (feder-)vorgespannten Zustand des Druckbehälters 1 die Reaktionskammer 2 nach außen sicher abdichtet. Mittels der Dichtung werden eventuelle Unebenheiten insbesondere in den Flanschbereichen 50, 60 ausgeglichen und ein sicher verschlossener Reaktionsbereich in der Reaktionskammer 2 erzielt. Die Dichtung ist dabei vorzugsweise als O-Ring ausgebildet. Ferner vorzugsweise ist die Dichtung in einer entsprechend vorgesehenen Nut im Deckel 6 oder Druckbehälter 1, also bspw. dem Unterteil 5, oder der Isolationsauskleidung 3 sicher angeordnet und gehalten. Ferner vorzugsweise kann die Dichtung des Weiteren durch die sie umgebende Wand des Deckels 6 oder des Unterteils 5 gehalten werden. Die Dichtung ist vorzugsweise aus Kunststoff (z.B. PFTE) hergestellt.

In einer bevorzugten Ausführungsform bildet die Isolationsauskleidung 3 einen in den Druckbehälter 1 einsetzbaren Behältereinsatz 9, der somit als herausnehmbare Isolationsauskleidung 3 vorgesehen ist. Der Behältereinsatz 9 kann an dem Deckel 6 angeordnet sein, vorzugsweise ist er auf abnehmbare Weise mit dem Deckel 6 verbunden. Somit ist die Handhabung der Proben P deutlich vereinfacht. Vorzugsweise hat der Behältereinsatz 9 bzw. die Reaktionskammer 2 ein Fassungsvermögen von 0.5 bis 1 Liter; die Erfindung ist jedoch nicht hierauf beschränkt.

Besonders vorzugsweise sind die Proben P zusammen mit dem Deckel 6 relativ zum Unterteil 5 bewegbar. Auf diese Weise können nach der Reaktion die Proben P zusammen mit dem Deckel 6 aus dem Druckbehälter 1, genauer dem Unterteil 5, herausgenommen bzw. zur Probenreaktion in den Druckbehälter 1 hineingesetzt werden. Dies geschieht vorzugsweise durch automatisches Hinein- und Herausfahren. Auf diese Weise wird ein einfaches Einführen sowie eine einfache Entnahme der Proben P aus dem Druckbehälter 1 ermöglicht, wodurch ein lästiges und aufwändiges Verschließen einzelner Druckbehälter 1 entfällt, was zu einer Einsparung der Probenbehandlungsdauer führt. Es ist bspw. denkbar, dass die Proben P in dem Behältereinsatz 9 direkt eingebracht sind. Die Probe P kann dann, wenn der Behältereinsatz 9 lösbar mit dem Deckel 6 verbunden ist, einfach aus dem Druckbehälter 1 mit dem Deckel 6 heraus- und in diesen wieder hineingefahren werden.

Beispielsweise können jedoch auch mehrere Proben P in einem Probenaufnahmeteil (nicht gezeigt; bspw. ein Probenkassettenhalter) angeordnet werden. Dieses Probenaufnahmeteil kann, zur vereinfachten Handhabung der einzelnen Proben P, an dem Deckel 6 angebracht, vorzugsweise lösbar mit diesem verbunden werden, wie im Weiteren noch näher erläutert. Hierzu ragt der Probenkassettenhalter vorzugsweise von dem Deckel 6 in die Reaktionskammer 2 hinein und stellt dort Halterungen für die Proben P aufnehmende Probenbehälter zur Verfügung, um diese definiert in der Reaktionskammer 2 zu platzieren. Durch das Anbringen des Probenaufhahmeteils an dem Deckel 6 wird die Behandlungsdauer einer Probe P verringert, da das aufwendige Verschließen jedes einzelnen Druckbehälters 1 bzw. jeder einzelnen Probe P vermieden werden kann. Beispielsweise kann auch beides, also das Probenaufnahmeteil und der Behältereinsatz 9 mit dem Deckel 6 verbunden, vorzugsweise lösbar verbunden sein.

Um das Probenaufnahmeteil und den Behältereinsatz 9 mit dem Deckel 6 lösbar zu verbinden, kann das Deckelteil 6 eine mechanische Aufnahme oder magnetische Halterung aufweisen. Eine mechanische Halterung kann beispielsweise mittels einer schwalbenschwanzförmigen Halterung oder einer Bajonettverbindung bereitgestellt werden, wobei ein entsprechender Teil der Verbindung auf der Unterseite des Deckels 6 vorgesehen ist, mit dem ein korrespondierender Teil der Verbindung der lösbar zu verbindenden Teile einfach verbunden werden kann. In die im Deckel 6 vorgesehene mechanische Aufnahme kann, wie zuvor beschrieben, beispielsweise ein Probenkassettenhalter eingesetzt und somit gehaltert werden. Alternativ kann anstelle einer mechanischen Aufnahme auch eine magnetische Halterung vorgesehen sein. D.h., in dem Behälteroberteil (Deckel 6) können Magnete vorgesehen sein, die beispielsweise einen Probenkassettenhalter oder einen vorzugsweise vom Deckel 6 in den Probenraum hineinragenden Rührer (nicht gezeigt) haltern. Die Erfindung ist jedoch nicht auf die vorher beschriebenen Verbindungstypen beschränkt. Auch andere Verbindungsarten, wie bspw. Schraubverbindungen oder Steckverbindungen oder Schnappverbindungen und dergleichen sind von der Erfindung mit umfasst.

Wenn neben den im Deckel 6 vorgesehenen Magneten ein Motor zum drehbaren Antreiben derselben vorgesehen ist, kann beispielsweise auch magnetisch der vorgenannte Rührer angetrieben werden, was insbesondere bei der Verwendung einer mikrowellenbasierten Probenanalyse von Vorteil ist.

Der Druckbehälter 1 kann folglich einen Motor aufweisen, mittels dem beispielsweise die Magnete der magnetischen Halterung drehbar antreibbar sind. In die magnetische, drehbar angetriebene Halterung kann dann ferner der Rührer angeordnet werden, der sodann durch die magnetische Halterung antreibbar ist. Mittels des Motors kann jedoch bspw. auch das Probenaufhahmeteil und/oder der Behältereinsatz 9 und/oder der Rührer (alle drei bspw. über ein Antreiben der mechanischen Aufnahme) und/oder die mechanische Aufnahme und/oder die Magnete der magnetischen Halterung (und über diese beiden folglich auch die daran (lösbar) angeordneten Teile) und/oder unterhalb der Probenaufnahme, des Probenaufhahmeteils oder des Behältereinsatzes 9 angeordnete Magnete drehbar angetrieben werden. In letztgenanntem Fall sind vorzugsweise in wenigstens einem, mehreren oder allen Probenbehältern des Probenaufnahmeteils (Probenkassettenhalters) bzw. in der Reaktionskammer 2 selbst Magnetrührstäbe (nicht gezeigt) angeordnet, die mittels der drehbar angetriebenen Magnete angetrieben werden und somit die Probe(n) durchrühren bzw. durchmischen können.

Gemäß der gezeigten Ausführungsform sind das Unterteil 5 und das Deckelteil 6 relativ zueinander automatisiert zwischen einer offenen Zugriffsposition und einer geschlossenen (Mikrowellen-)Behandlungsposition verfahrbar, wobei ein Behältereinsatz 9 mit dem Deckelteil 6 verbunden sein kann. Im Betriebszustand wird das Deckelteil 6 somit vorzugsweise automatisch, d.h. durch eine Steuereinheit und einen Motor angesteuert abgesenkt, wobei sich besonders vorzugsweise gleichzeitig mit dem Deckelteil 6 eine transparente Schutzhaube (nicht gezeigt) absenkt, welche zum Schutz vor austretenden Gasen den Druckbehälter vollständig abdeckt und zudem eine Absaugvorrichtung zum Absaugen von eventuell austretenden Gasen (bspw. beim Abblasen) aufweist.

Der Druckbehälter 1 kann ferner einen Fluid-Einlass FE sowie ein Fluid-Auslass FA in der Reaktionskammer 2 aufweisen, wobei Einlass FE und Auslass FA vorzugsweise in dem Deckel 6 angeordnet sind. Dabei können Einlass FE und Auslass FA eine sogenannte Gasspülvorrichtung (nicht gezeigt) zum Ausspülen eines in der Reaktionskammer 2 befindlichen Gases bilden. In einer anderen, optionalen oder zusätzlichen Ausgestaltungsform dient der Einlass FE zum Erzeugen eines Innendrucks in der Reaktionskammer 2. Durch einen Vorladedruck mit Gas kann bspw. der Behältereinsatz 9 zu einer optimalen Kühlung mittels der Kühlanordnung 4 bereits zu Beginn der Druckreaktion an die Behälterwand des Druckbehälters 1 gedrückt werden. Der Auslass FA hingegen dient zum Abblasen eines einen bestimmten Schwellenwert übersteigenden Innendrucks in der Reaktionskammer 2 sowie generell zum Druckabbau. Dazu ist vorzugsweise in dem Ablass FA ein Ventil vorgesehen, welches bei entsprechendem Überdruck öffnet, um eine Beschädigung der Vorrichtung zu verhindern. Vorzugsweise sind der Einlass FE und der Auslass FA mit Leitungen zum Zuführen bzw. Abführen eines Gases (vgl. bspw. Pfeile P3, P4) bzw. zum Erzeugen eines Innendrucks im Druckbehälter 1 verbunden. Vorzugsweise hat die Leitung, welche mit dem Auslass FA verbunden ist, einen größeren Durchmesser, als die Leitung, welche mit dem Einlass FE verbunden ist, da die Leitung des Auslasses FA dem hohen Innendruck und den hohen Temperaturen im Falle eines Abblasens standhalten muss. Sind der vorbeschriebenen Einlass FE und Auslass FA zum Abblasen vorgesehen, kann entweder die vorbeschriebene Dichtung derart vorgesehen sein, dass bei einem Abblasen eine Ventil mit Druckfeder entsprechend der Vorspannung öffnet (nur den Überdruck entlastend); zum vollständigen Druckentlasten nach der Reaktion öffnet das Ventil vorzugsweise elektrisch und baut den Druck programmiert ab, um Probenverluste durch extreme Blasenbildung zu vermeiden. Alternativ ist vorzugsweise zusätzlich eine Berstscheibe am Ausgang der Druck-Ablassleitung untergebracht, welche bei Überschreiten eines Druckschwellwertes zerbirst, wodurch der Innendruck im Druckbehälter 1 schlagartig abfallen kann, beispielsweise, wenn eine Überdrucksicherung mittels des in der Leitung des Auslassens FA vorgesehenen Ventils nicht mehr sicher ermöglicht werden kann. Das ist bei stark exothermen Reaktionen vorteilhaft. (Achtung der Deckel kann nicht durch eine Federvorrichtung selektiv öffnen!)
In diesem Fall ist vorzugsweise eine oben beschriebene Absaugvorrichtung (evtl. mit Schutzhaube) vorgesehen, um eventuell freiwerdende Gase sicher abzusaugen.

Wie in Figur 1 gezeigt, weist die Vorrichtung 1 ferner einen Temperaturfühler bzw. eine Referenz-Temperatur-Sonde 12 auf. Diese(r) ist bspw. aus chemikalienresistentem Edelstahl oder Tantal. Der Temperaturfühler 12 ist vorzugsweise derart an dem Deckelteil 6 angeordnet bzw. angebracht, dass er in den Probenraum (Reaktionskammer, Probenbehälter, Druckraum) und vorzugsweise in die Probe P hineinragt, wenn der Probenraum geschlossen ist. Es sind jedoch auch andere, dem Fachmann bekannte Ausgestaltungsformen zur Messung der Temperatur in dem Probenraum möglich.

Gemäß Figur 1 wird die Probe P durch Einwirkung von Mikrowellen beheizt. Dabei ist die Reaktionskammer 2 zumindest teilweise mikrowellendurchlässig, der Druckbehälter 1 ist vorzugsweise mikrowellenundurchlässig. Der mikrowellenundurchlässige Druckbehälter 1 ist über eine mikrowellendurchlässige Koppelöffnung K an einen Mikrowellengenerator M anschließbar. Dazu ist beispielsweise zur Einkopplung der Mikrowellen im Boden B des Druckbehälters 1 die Koppelöffnung K vorgesehen, in der bzw. unter der ein mit einem Magnetron M1 in Verbindung stehender Hohlleiter M2 angeordnet ist. Zum Einkoppeln der Mikrowellen in die Reaktionskammer 2 weist der Druckbehälter 1 vorzugsweise ein Abstrahlelement M3 des Mikrowellengenerators G in der Koppelöffnung K auf. Das Abstrahlelement M3 ist vorzugsweise als Antenne ausgebildet, und ist besonders vorzugsweise aus einem hochtemperaturbeständigem Material (z.B. Metall) hergestellt. Ferner ist das Abstrahlelement M3 vorzugsweise von einem Kunststoff wie bspw. PTFE oder Quarz umgeben. Die Mikrowelleneintragung erfolgt folglich durch den Bodenteil B des Druckbehälters 1. Besonders vorzugsweise ist die Vorrichtung derart ausgebildet, dass eine koaxiale Leitung bzw. Einkopplung der Mikrowelle stattfindet.

Zwischen der Koppelöffnung K und der Reaktionskammer 2 ist ein Mikrowellen-durchlässiger Bereich 80 des Druckbehälters 1 gebildet, über den die Mikrowellen in die Reaktionskammer 2 eingekoppelt werden. Erfindungsgemäß weist der Mikrowellen-durchlässigen Bereich 80 ein Druckaufnahmeteil 71 auf, welches dazu dient, den Druck der Reaktionskammer 2 gegenüber der Koppelöffnung K abzustützen. Gemäß einer besonders bevorzugten Ausgestaltungsform ist der Mikrowellen-durchlässige Bereich durch das Druckaufnahmeteil 71 gebildet. Das Druckaufnahmeteil 71 weist hierzu vorzugsweise die gleiche Querschnittsform auf wie die des von den Seitenwänden 10 des Druckbehälters 1 umgebenden Innenraums (also wie die Behälterinnenwand) desselben. Das Druckaufnahmeteil 71 bildet somit den Boden B oder wenigstens einen Teil des Bodens B des Druckbehälters 1. Das Druckaufnahmeteil 71 weist somit einen größeren Durchmesser als die Koppelöffnung K auf und kann sich daher sicher an dem Druckbehälter 1 abstützen. Somit kann der Druck der Reaktionskammer 2 auf dem Boden B des Druckbehälters 1 sicher aufgefangen und gegenüber der Koppelöffnung K abgestützt werden. Das Druckaufnahmeteil 71 ist jedoch nicht auf die vorbeschriebene Querschnittsform beschränkt, jedoch korrespondiert diese vorzugsweise mit der Querschnittsform der Druckbehälterinnenwand bzw. des Druckbehälterinneren. Das Druckaufnahmeteil 71 kann somit z.B. zylindrisch oder quader- bzw. würfelförmig oder auch andersförmig ausgebildet sein.

Das Druckaufnahmeteil 71 ist vorzugsweise aus einem druckbeständigen Material wie bspw. aus Aluminiumoxid, Saphir, Kalziumfluorid, Quarz, Keramik oder PTFE-Materialien hergestellt. Auf diese Weise wird ein Druckaufnahmeteil 71 zur Verfügung gestellt, welches neben der Druckbeständigkeit zudem hochtemperaturbeständig ist; wenigstens innerhalb des Temperaturbereichs der Probe P während einer Druckreaktion. Ferner zeichnen sich die vorgenannten Materialien durch eine besonders hohe Härte (Kratzfestigkeit) und ihre Beständigkeit gegenüber Chemikalien aus. Ein besonderer Vorteil der vorgenannten, insbesondere der keramischen Materialien ist, dass die als Proben eingesetzten Chemikalien keine Veränderungen an dem Material hervorrufen, wie es häufig bei Kunststoffen der Fall ist. Somit bleibt die Mikrowellen-Transparenz des Druckaufnahmeteils 71 während der Druckreaktion bzw. Reaktionsdauer konstant, was zu gleichmäßigen Ergebnissen über die Lebensdauer des Druckaufnahmeteils 71 und des gesamten Druckbehälters 1 hinweg führt. Der Mikrowellen-durchlässigen Bereich 80 ist also vorzugsweise vollständig durch ein keramisches und chemikalienbeständiges Material gebildet, welches wiederum vorzugsweise den Boden B (also die gesamte Bodenfläche des Druckbehälters 1 oder wenigstens einen die Koppelöffnung K komplett abdeckenden und somit abstützenden Bodenbereich) des Druckbehälters 1 bildet. Der Einsatz eines Druckaufnahmeteils 71 aus einem keramischen und chemikalienbeständigen Material im Bereich des Mikrowellen-durchlässigen Bereichs 80 oder vorzugsweise den Mikrowellen-durchlässigen Bereich 80 bildend, besonders vorzugsweise den Boden B des Druckbehälters 1 bildend, führt somit aufgrund seiner Positionierung, Dicke und materialtechnischen und geometrischen Ausgestaltung dazu, einen Mikrowellen-durchlässigen Bereich 80 bzw. ein Druckaufnahmeteil 71 bereitzustellen, die den auftretenden Drücken von über 400bar standhalten (und somit die Koppelöffnung K sicher abstützen), während die physikalischen Eigenschaften des Mikrowellen-durchlässigen Bereichs 80 bezüglich Mikrowellentransparenz sowie dessen Stabilität (also Stützfunktion) vorzugsweise aufgrund der verwendeten Materialien in Verbindung mit der Dicke und der Chemikalienbeständigkeit des Druckaufnahmeteils 71 langfristig konstant gehalten werden.

In einer besonders bevorzugten Ausgestaltungsform ist das Druckaufnahmeteil 71 lösbar in dem Druckbehälter 1 vorgesehen, so dass es bei Verschleiß oder Zerstörung einfach ausgetauscht werden kann. Auch kann somit wahlweise ein Druckaufnahmeteil 71 bereitgestellt werden, welches insbesondere auf die zu verwendenden Probenmaterialien sowie die Reaktionsparameter (bspw. Druck, Temperatur, Reaktionsdauer, etc.) bestmöglich abgestimmt ist.

Das Druckaufnahmeteil 71 weist vorzugsweise zwischen der Koppelöffnung K und der Reaktionskammer 2 eine Dicke von 10 bis 60 mm vorzugsweise eine Dicke von 15-30 mm auf. Somit ist ein vergleichsweise dickwandiges Druckaufnahmeteil 71 bereitgestellt, welches einerseits eine kompakte Bauweise ermöglicht und zugleich eine ausreichende Stärke aufweist, um auch hohen Drücken standzuhalten und die Koppelöffnung K sicher gegenüber dem Druck der Reaktionskammer 2 abzustützen.

Das Druckaufnahmeteil 71 weist eine sich zwischen der Koppelöffnung K und der Reaktionskammer 2 in Mikrowelleneinkopplungsrichtung R erstreckende, durchgehende Öffnung 72 auf. Diese Öffnung 72 ist mit einem von dem Material des Druckaufnahmeteils 71 sich unterscheidenden Material ausgefüllt. Besonders vorzugsweise bildet dieses Material, wie in Figur 1 gezeigt, eine Material-Säule 73 im Druckaufnahmeteil 71, welche vorzugsweise einen Durchmesser zwischen 10 und 30 mm aufweist. Diese Säule dient insbesondere als Strahlungsfilter, um einen definierten spektralen Anteil der IR-Emission der Probe P an einen außerhalb der Reaktionskammer 2 und vorzugsweise außerhalb des Druckbehälters 1 angeordneten Sensor zur berührungslosen Temperatur-Messung sowie die Mikrowellenstrahlung durchzulassen.

Das die Öffnung ausfüllende Material des Druckaufnahmeteils 71 weist vorzugsweise die Mikrowellen und IR-Transmission verändernde oder optimierende Eigenschaften auf. Der Einsatz des Materials bzw. der Material-Säule 73 erfolgt insbesondere dann, wenn das Material des gesamten Druckaufnahmeteils 71 teuer ist (z.B. Saphir), so dass sich aufgrund des verringerten Materialaufwands durch Vorsehen der Material-Säule 73 Einsparungen ergeben.

Ferner weist das die Öffnung 72 ausfüllende Material des Druckaufnahmeteils 71 vorzugsweise im Wesentlichen einen ähnlichen bis identischen Ausdehnungskoeffizient auf wie das Material des Druckaufnahmeteils 71 selbst. Somit kann auch bei hohen und häufigen Temperaturschwankungen und Temperaturanstiegen während einer Druckreaktion eine sichere und geschlossene Vorrichtung (Behälter 1) bereitgestellt werden, die zudem eine lange Lebensdauer aufweist.

Das Druckaufnahmeteil 71 kann mit einem ersten Ende bzw. einer ersten Fläche an der Reaktionskammer 2 bzw. dem Behältereinsatz 9 vorzugsweise flächig anliegen, während das/die dem ersten Ende bzw. der ersten Fläche vorzugsweise gegenüberliegende Ende bzw. Fläche an der Innenwandung des Druckbehälters 1 auf Seiten der Koppelöffnung K anliegt und letztgenannte abdeckt.

Das Druckaufnahmeteil 71 ist vorzugsweise von einer Dichtung 92 umgeben. Dieser Teil kann aus O-Ringen (PTFE-Elastormeren) oder aus einem dünnen Deckel aus PTFE-Werkstoffen bestehen, der das Druckaufnahmeteil 71 abdichtet und gleichzeitig die unterschiedlichen thermischen Ausdehnungs-Verhalten (Metallbehälter und Keramikteil) der Materialien kompensiert.

Besonders vorzugsweise ist das Dichtelement 92 wenigstens zwischen dem Druckaufnahmeteil 71 und der Innenwandung des Druckbehälters 1 derart vorgesehen, dass die Koppelöffnung K von der Reaktionskammer 2 dichtend getrennt ist. Auf diese Weise können bspw. Unebenheiten und unterschiedliche Ausdehnungskoeffizienten in dem Druckaufnahmeteil 71 ausgeglichen werden, so dass die Koppelöffnung K bzw. ein darin angeordnetes Abstrahlelement M3 sicher von der Druckreaktion (also bspw. den Drücken sowie den in der Reaktionskammer befindlichen Proben(-Materialien)) durch das Dichtelement 92 abgeschirmt wird. Das Dichtelement 92 ist vorzugsweise aus PTFE gebildet.

In einer bevorzugten Ausgestaltungsform des Dichtelements 92 weist dieses einen Deckel 93 auf und arbeitet folglich wie ein Deckel, welcher das Druckaufnahmeteil 71 wenigstens teilweise umgibt. Gemäß Figur 1 ist das Dichtelement 92 in Form eines die der Innenwand des Druckbehälters 1 sowie die der Reaktionskammer 2 zugewandten Seiten des Druckaufnahmeteils 71 abdeckenden und abdichten Deckels 93 gebildet. Ein derartiger Deckel 93 ist vorzugsweise lösbar in dem Druckbehälter 1 vorgesehen und ferner vorzugsweise lösbar mit dem Druckaufnahmeteil 71 verbunden und kann somit auf das Druckaufnahmeteil 71 aufgesetzt und je nach Probenmaterial, Druck, Temperatur und anderen Druckreaktionsparametern wahlweise ersetzt und somit den entsprechenden Bedingungen angepasst werden. Im Fall der Ausgestaltung des Dichtelements 92 als Deckel 93 befindet sich wenigstens ein Teil des Dichtelementes 92 zwischen Reaktionskammer 2 bzw. Behältereinsatz 9 und Druckaufnahmeteil 71. Folglich liegt das Dichtelement 92 in diesem Fall vorzugsweise (flächig) am Boden der Reaktionskammer 2 bzw. des Behältereinsatzes 9 an. Die Erfindung ist jedoch nicht auf die gezeigte deckelförmige Ausgestaltung des Dichtelementes 92 beschränkt, solange dieses eine sichere Abdichtung (insbesondere eine Fluidabdichtung gegenüber unter Druck stehenden Gasen oder Flüssigkeiten in der Reaktionskammer) der Koppelöffnung K und eventueller Abstrahlelemente M3 von der Reaktionskammer 2 bewirkt. Beispielsweise kann das Dichtelement 92 auch nur an den der Innenwandung des Druckbehälters 1 zugewandten Seiten des Druckaufnahmeteils 71 bspw. als ringförmige Dichtung vorgesehen sein. Vorteilhaft ist es auch denkbar, dass das Dichtelement 92 das Druckaufnahmeteil 71 vollständig wie ein Deckel oder eine Ummantelung umgibt.

Mit dem erfindungsgemäßen Druckaufnahmeteil 71 ist es folglich möglich, den Druckbehälter 1 auch bei großen Drücken von ca. 500bar zu betreiben, während der Druck in der Reaktionskammer 2 sicher und einfach gegenüber der Koppelöffnung K und ggf. etwaigen Abstrahlelementen M3 des Mikrowellengenerators M (bspw. der Antenne) sicher abgestützt wird.

Im Folgenden wird ein Verfahren zum Auslösen und/oder Fördern chemischer und/oder physikalischer Druckreaktionen an Proben P beschrieben.

Zunächst werden die Proben P in einer mittels Mikrowellen-Heizung beheizbaren Reaktionskammer 2 eines die Reaktionskammer 2 allseitig umgebenden Druckbehälters 1, vorzugsweise aufweisend den Unterteil 5 und den Deckelteil 6, platziert und mittels Mikrowellen erhitzt und dabei einem Druck ausgesetzt. Das Probenaufnahmeteil und/oder der Behältereinsatz 9 können dabei in die Reaktionskammer 2 eingesetzt und dazu vorzugsweise vorher mit dem Deckelteil 6 verbunden werden. Vorzugsweise werden die Proben P (bspw. über einen den Probenkassettenhalter antreibenden Motor oder mittels einen durch Magnete angetriebenen Rührer) unter Rühren erhitzt.

Das Erhitzen geschieht mittels Mikrowellen, die über eine Koppelöffnung K (und ggf. ein darin angeordnetes Abstrahlelement M3) und über einen Mikrowellen-durchlässigen Bereich 80 des Druckbehälters 1 in die Reaktionskammer 2 eingekoppelt werden. Der Mikrowellen-durchlässige Bereich 80 wird hierbei von einem Druckaufnahmeteil 71 gebildet, welches zwischen der Koppelöffnung K und der Reaktionskammer 2 vorzugsweise dichtend angeordnet ist. Mittels dieses Druckaufnahmeteils 71 kann der in der Reaktionskammer 2 steigende Druck gegenüber der Koppelöffnung K und etwaigen Abstrahlelementen M3 abgestützt und diese somit vor mechanischen Belastungen geschützt werden.

Das Druckaufnahmeteil 71 kann vorzugsweise lösbar in dem Druckbehälter 1 vorgesehen sein, mit einem Dichtelement 92 wenigstens teilweise umgeben sein, um die Koppelöffnung K von der Reaktionskammer 2 sicher abzudichten, und das Druckaufnahmeteil 71 kann zudem den Boden(-Teilbereich) B des Druckbehälters 1 bilden. Ferner kann in dem Druckaufnahmeteil 71 und vorzugsweise entlang der Mikrowelleneinkopplungsrichtung R eine mit einem die Mikrowellen optimierenden Material gefüllte Öffnung 72 (die eine Materialsäule 73 bilden) vorgesehen sein.

In einer bevorzugten Ausführungsform wird der Druckbehälter 1, der vorzugsweise eine die Reaktionskammer 2 umschließende Isolationsauskleidung 3 aufweist, durch die mittels Mikrowellenheizung erhitzten Proben P erhitzt und gleichzeitig durch eine die Reaktionskammer 2 umgebende Kühlanordnung 4 gekühlt.

Es wird darauf hingewiesen, dass die Erfindung nicht auf die in den vorgenannten Ausführungsbeispielen dargestellten Ausgestaltungen beschränkt ist, solange sie vom Gegenstand der Ansprüche umfasst sind. Insbesondere ist der Druckbehälter 1 nicht auf die vorgenannte Topfform beschränkt. Auch ist die Kühlanordnung 4 nicht auf eine Kühlung/Heizung durch Umlaufkühler/Thermostat beschränkt, solange die geforderte Kühlung erzielt wird. Zudem ist die Erfindung nicht auf ein spezielles Material der Innenauskleidung 3 beschränkt, so lange dieses die gewünschte Isolationswirkung erzielt. Auch die in dem Ausführungsbeispiel genannten Dimensionen und Materialien des Druckaufnahmeteils 71, der Materialsäule 73 sowie des Dichtelements 92 sind nicht beschränkend, solange sie vom Gegenstand des Antragsdokumentes gestützt sind und die Aufgabe eines sicheren Abstützens des Drucks in der Reaktionskammer 2 gegenüber der Koppelöffnung K und etwaigen Abstrahlelementen M3 ermöglichen. Alle Merkmale des vorgenannten Ausführungsbeispiels können in jeder beliebigen Weise kombiniert werden bzw. zusammen auftreten, solange sie vom Gegenstand der folgenden Ansprüche umfasst sind.

## Patentansprüche

1. Druckbehälter (1) zur Aufnahme von zu beheizenden Proben (P), wobei der Druckbehälter (1) eine verschließbare Reaktionskammer (2) als Druckraum zum Auslösen und/oder Fördern chemischer und/oder physikalischer Druckreaktionen aufweist, und wobei der Druckbehälter (1) eine Koppelöffnung sowie einen Mikrowellen-durchlässigen Bereich (80) zwischen der Koppelöffnung (K) und der Reaktionskammer (2) aufweist, über die Mikrowellen in die Reaktionskammer (2) eingekoppelt werden können, wobei der Mikrowellen-durchlässige Bereich (80) ein Druckaufnahmeteil (71) aufweist, um den Druck der Reaktionskammer (2) gegenüber der Koppelöffnung (K) abzustützen, und das Druckaufnahmeteil (71) eine sich zwischen der Koppelöffnung (K) und der Reaktionskammer (2) in Mikrowelleneinkoppelrichtung (R) erstreckende, durchgehende Öffnung (72) aufweist, welche mit einem von dem Material des Druckaufnahmeteils (71) sich unterscheidenden Material ausgefüllt ist, **dadurch gekennzeichnet, dass** das Druckaufnahmeteil (71) wenigstens einen Teil des Bodens (B) des Druckbehälters (1) bildet, sodass das Druckaufnahmeteil (71) einen größeren Durchmesser als die Koppelöffnung (K) aufweist und sich somit an dem Druckbehälter (1) abstützt.

2. Druckbehälter (1) nach Anspruch 1, wobei das Druckaufnahmeteil (71) aus einem vorzugsweise keramischen und chemikalienbeständigen Material bestehend aus Aluminiumoxid, Saphir, Kalziumfluorid, Quarz oder Keramik gebildet ist, so dass die physikalischen Eigenschaften des Mikrowellen-durchlässigen Bereichs (80) bezüglich Mikrowellentransparenz und Stabilität während einer Druckreaktion des Druckbehälters (1) konstant gehalten werden.

3. Druckbehälter (1) nach Anspruch 1 oder 2, wobei der Mikrowellen-durchlässigen Bereich (80) durch das Druckaufnahmeteil (71) gebildet ist.

4. Druckbehälter (1) nach einem der vorhergehenden Ansprüche, wobei der Mikrowellen-durchlässige Bereich (80) vollständig durch ein vorzugsweise keramisches und chemikalienbeständiges Material gebildet ist, welches den Boden des Druckbehälters (1) bildet.

5. Druckbehälter (1) nach einem der vorhergehenden Ansprüche, wobei das Druckaufnahmeteil (71) zwischen der Koppelöffnung (K) und der Reaktionskammer (2) eine Dicke von 10-60mm, vorzugweise eine Dicke von 15-30mm aufweist.

6. Druckbehälter (1) nach einem der vorhergehenden Ansprüche, wobei das die durchgehende Öffnung (72) auffüllende und sich von dem Material des Druckaufnahmeteils (71) unterscheidende Material eine Materialsäule (73) im Druckaufnahmeteil (71) bildet,
wobei das die Öffnung (72) ausfüllende Material des Druckaufnahmeteils (71) vorzugsweise Mikrowellen verändernde oder optimierende Eigenschaften aufweist, und
wobei das die Öffnung (72) ausfüllende Material des Druckaufnahmeteils (71) vorzugsweise im Wesentlichen den gleichen Ausdehnungskoeffizient wie das Material des Druckaufnahmeteils (71) aufweist.

7. Druckbehälter (1) nach einem der vorhergehenden Ansprüche, wobei ein Dichtelement (92) wenigstens zwischen dem Druckaufnahmeteil (71) und der Innenwandung des Druckbehälters (1) derart vorgesehen ist, dass die Koppelöffnung (K) von der Reaktionskammer (2) dichtend, insbesondere gegenüber in der Reaktionskammer (2) unter Druck stehenden Fluiden dichtend getrennt ist,
wobei das Dichtelement (92) vorzugsweise aus PTFE hergestellt ist, und
wobei das Dichtelement (92) vorzugsweise einen Deckel (93) aufweist, welcher das Druckaufnahmeteil (71) wenigstens teilweise umgibt.

8. Druckbehälter (1) nach einem der vorhergehenden Ansprüche, wobei das Druckaufnahmeteil (71) aus einem chemikalien-, temperatur- und druckbeständigen Material hergestellt ist, vorzugsweise aus Aluminiumoxid, Saphir, Kalziumfluorid, Quarz oder Keramik.

9. Druckbehälter (1) nach einem der vorhergehenden Ansprüche, wobei das Druckaufnahmeteil (71) lösbar in dem Druckbehälter (1) vorgesehen ist.

10. Druckbehälter (1) nach einem der vorhergehenden Ansprüche, wobei in der Koppelöffnung (K) ein Abstrahlelement (M3) eines Mikrowellengenerators (M) vorgesehen ist, um die Mikrowellen in die Reaktionskammer (2) des Druckbehälters (1) einzukoppeln, wobei das Druckaufnahmeteil (71) die Reaktionskammer (2) gegenüber dem Abstrahlelement (M3) abstützt.

11. Druckbehälter (1) nach einem der vorhergehenden Ansprüche, wobei das Abstrahlelement (M3) eine Antenne des Mikrowellengenerators (M) ist, welche vorzugsweise von einem hochtemperaturbeständigem Material, vorzugsweise einem Kunststoff wie bspw. PTFE, umgeben ist.

12. Druckbehälter (1) nach einem der vorhergehenden Ansprüche, wobei der Druckbehälter (1) einen Unterteil (5) und einen Deckelteil (6) aufweist, die miteinander verschließbar sind und im geschlossenen Zustand allseitig die Reaktionskammer (2) umgeben.

13. Druckbehälter (1) nach einem der vorhergehenden Ansprüche, wobei der Druckbehälter (1) eine die Reaktionskammer (2) umschließende, vorzugsweise herausnehmbare Isolationsauskleidung (3) aufweist, die vorzugsweise aus Kunststoff, PTFE oder Keramik besteht.

14. Druckbehälter (1) nach einem der vorhergehenden Ansprüche, wobei der Druckbehälter (1) eine die Reaktionskammer (2) umgebende Kühlanordnung (4) derart aufweist, dass der Druckbehälter (1) gleichzeitig beheizbar und kühlbar ist, wobei die Kühlanordnung (4) vorzugsweise eine Durchflusskühlung ist, die wenigstens einen Einlass (40) und einen Auslass (41) für ein Kühlmedium aufweist.

## Claims

1. Pressure vessel (1) for receiving samples (P) to be heated, the pressure vessel (1) comprising a closable reaction chamber (2) as a pressure chamber for triggering and/or promoting chemical and/or physical pressure reactions, and wherein the pressure vessel (1) comprises an injection opening and a microwave transmitting area (80) between the injection opening (K) and the reaction chamber (2) through which microwaves can be injected into the reaction chamber (2),
the microwave transmitting area (80) comprising a pressure receiving part (71) for supporting the pressure of the reaction chamber (2) against the injection opening (K), and the pressure receiving part (71) comprising a through opening (72) extending between the injection opening (K) and the reaction chamber (2) in the microwave injection direction (R) that is filled with a material different from the material of the pressure receiving part (71), **characterized in that**
the pressure receiving part (71) forms at least a part of the bottom (B) of the pressure vessel (1), such that the pressure receiving part (71) has a larger diameter than the injection opening (K) and thus, is supporting the pressure vessel (1).

2. Pressure vessel (1) according to claim 1, wherein the pressure receiving part (1) is preferably formed of a ceramic material resistant to chemicals comprised of aluminium oxide, sapphire, calcium fluoride, silica or ceramics, such that the physical characteristics of the microwave transmitting area (80) regarding to microwave transmission and stability are maintained constant during a pressure reaction of the pressure vessel (1).

3. Pressure vessel (1) according to claim 1 or claim 2, wherein the microwave transmitting area (80) is formed of the pressure receiving part (71).

4. Pressure vessel (1) according to any of the preceding claims, wherein the microwave transmitting area (80) is formed entirely of a preferably ceramic material or a material resistant to chemicals forming the bottom of the pressure vessel (1).

5. Pressure vessel (1) according to any of the preceding claims, wherein the pressure receiving part (71) between the injection opening (K) and the reaction chamber (2) has a thickness of 10 - 60 mm, preferably a thickness of 15 - 30 mm.

6. Pressure vessel (1) according to any of the preceding claims, wherein the material filling the trough opening (72) and being different from the material of the pressure receiving part (71) forms a material column (73) in the pressure receiving part (71),
wherein the material filling the opening (72) of the pressure receiving part (71) preferably comprises characteristics modifying or optimizing the microwaves, and
wherein the material filling the opening (72) of the pressure receiving part (71) preferably comprises essentially the same extension coefficient as that of the material of the pressure receiving part (71).

7. Pressure vessel (1) according to any of the preceding claims, wherein a sealing member (92) is provided at least between the pressure receiving part (71) and the inner wall of the pressure vessel (1), such that the injection opening (K) of the reaction chamber (2) is separated in a sealing manner particularly from the fluids under pressure in the reaction chamber (2),
wherein the sealing member (92) is preferably made of PTFE, and
wherein the sealing member (92) preferably comprises a cover (93) at least partially surrounding the pressure receiving part (71).

8. Pressure vessel (1) according to any of the preceding claims, wherein the pressure receiving part (71) is made of a material resistant to chemicals, temperature and pressure, preferably aluminium oxide, sapphire, calcium fluoride, silica or ceramics.

9. Pressure vessel (1) according to any of the preceding claims, wherein the pressure receiving part (71) is provided detachably in the pressure vessel (1).

10. Pressure vessel (1) according to any of the preceding claims, wherein an emission member (M3) of a microwave generator (M) is provided in the injection opening (K) for injecting the microwaves into the reaction chamber (2) of the pressure vessel (1), the pressure receiving part (71) supporting the reaction chamber (2) against the emission member (M3).

11. Pressure vessel (1) according to any of the preceding claims, wherein the emission member (M3) is an antenna of the microwave generator (M) which is preferably surrounded by a high-temperature resistive material, preferably a plastic material, for example PTFE.

12. Pressure vessel (1) according to any of the preceding claims, wherein the pressure vessel (1) comprises a lower part (5) and a cover part (6), that can be closed together and surround the reaction chamber (2) all-over in the closed state.

13. Pressure vessel (1) according to any of the preceding claims, wherein the pressure vessel (1) comprises an insulating lining (3) surrounding the reaction chamber (2), which is preferably removable, preferably comprised of plastics, PTFE or ceramics.

14. Pressure vessel (1) according to any of the preceding claims, wherein the pressure vessel (1) comprises a cooling arrangement (4) surrounding the reaction chamber (2) such that the pressure vessel (1) can be heated and cooled at the same time, wherein the cooling arrangement (4) is preferably a flow cooling comprising at least an inlet (40) and an outlet (41) for a cooling medium.

## Revendications

1. Récipient sous pression (1) pour recevoir des échantillons (P) à chauffer, dans lequel le récipient sous pression (1) présente une chambre de réaction (2) pouvant être fermée en tant qu'espace de pression pour déclencher et/ou favoriser des réactions sous pression chimiques et/ou physiques et dans lequel le récipient sous pression (1) présente une ouverture de couplage ainsi qu'une zone perméable aux micro-ondes (80) entre l'ouverture de couplage (K) et la chambre de réaction (2), par l'intermédiaire de laquelle des micro-ondes peuvent être injectées dans la chambre de réaction (2),
dans lequel la zone perméable aux micro-ondes (80) présente une partie d'absorption de pression (71) pour soutenir la pression de la chambre de réaction (2) par rapport à l'ouverture de couplage (K), et
la partie d'absorption de pression (71) présente une ouverture (72) traversante s'étendant entre l'ouverture de couplage (K) et la chambre de réaction (2) dans la direction d'injection des micro-ondes (R), laquelle est remplie d'un matériau se distinguant du matériau de la partie d'absorption de pression (71), **caractérisé en ce que**
la partie d'absorption de pression (71) forme une partie du fond (B) du récipient sous pression (1) si bien que la partie d'absorption de pression (71) présente un diamètre plus grand que l'ouverture de couplage (K) et prend appui ainsi sur le récipient sous pression (1).

2. Récipient sous pression (1) selon la revendication 1, dans lequel la partie d'absorption de pression (71) constituée d'un matériau de préférence céramique et résistant aux produits chimiques est formée à partir d'oxyde d'aluminium, de saphir, de fluorure de calcium, de quartz ou de céramique de sorte que les propriétés physiques de la zone perméable aux micro-ondes (80) sont maintenues de manière constante en termes de transparence de micro-ondes et de stabilité pendant une réaction sous pression du récipient sous pression (1).

3. Récipient sous pression (1) selon la revendication 1 ou 2, dans lequel la zone perméable aux micro-ondes (80) est formée par la partie d'absorption de pression (71).

4. Récipient sous pression (1) selon l'une quelconque des revendications précédentes, dans lequel la zone perméable aux micro-ondes (80) est formée totalement par un matériau de préférence céramique et résistant aux produits chimiques, lequel forme le fond du récipient sous pression (1).

5. Récipient sous pression (1) selon l'une quelconque des revendications précédentes, dans lequel la partie d'absorption de pression (71) présente, entre l'ouverture de couplage (K) et la chambre de réaction (2), une épaisseur de 10-60 mm, de préférence une épaisseur de 15-30 mm.

6. Récipient sous pression (1) selon l'une quelconque des revendications précédentes, dans lequel le matériau remplissant l'ouverture (72) traversante et se distinguant du matériau de la partie d'absorption de pression (71) forme une colonne de matériau (73) dans la partie d'absorption de pression (71),
dans lequel le matériau, remplissant l'ouverture (72), de la partie d'absorption de pression (71) présente de préférence des propriétés modifiant ou optimisant des micro-ondes,
et dans lequel le matériau, remplissant l'ouverture (72), de la partie d'absorption de pression (71) présente de préférence sensiblement le même coefficient de dilatation que le matériau de la partie d'absorption de pression (71).

7. Récipient sous pression (1) selon l'une quelconque des revendications précédentes, dans lequel un élément d'étanchéité (92) est prévu de telle manière entre la partie d'absorption de pression (71) et la paroi intérieure du récipient sous pression (1) que l'ouverture de couplage (K) est séparée de manière étanche de la chambre de réaction (2), en particulier de manière étanche par rapport à des fluides sous pression dans la chambre de réaction (2),
dans lequel l'élément d'étanchéité (92) est fabriqué de préférence à partir de PTFE, et
dans lequel l'élément d'étanchéité (92) présente de préférence un couvercle (93), lequel entoure au moins en partie la partie d'absorption de pression (71).

8. Récipient sous pression (1) selon l'une quelconque des revendications précédentes, dans lequel la partie d'absorption de pression (71) est fabriquée à partir d'un matériau résistant aux produits chimiques, aux températures et à la pression, de préférence à partir d'oxyde d'aluminium, de saphir, de fluorure de calcium, de quartz ou de céramique.

9. Récipient sous pression (1) selon l'une quelconque des revendications précédentes, dans lequel la partie d'absorption de pression (71) est prévue de manière amovible dans le récipient sous pression (1).

10. Récipient sous pression (1) selon l'une quelconque des revendications précédentes, dans lequel un élément d'émission (M3) d'un générateur de micro-ondes (M) est prévu dans l'ouverture de couplage (K) pour injecter les micro-ondes dans la chambre de réaction (2) du récipient sous pression (1), dans lequel la partie d'absorption de pression (71) soutient la chambre de réaction (2) par rapport à l'élément d'émission (M3).

11. Récipient sous pression (1) selon l'une quelconque des revendications précédentes, dans lequel l'élément d'émission (M3) est une antenne d'un générateur de micro-ondes (M), laquelle est entourée de préférence d'un matériau résistant à des températures élevées, de préférence d'une matière plastique, par exemple du PTFE.

12. Récipient sous pression (1) selon l'une quelconque des revendications précédentes, dans lequel le récipient sous pression (1) présente une partie inférieure (5) et une partie formant couvercle (6), qui peuvent être fermées l'une avec l'autre et entourent de toutes parts, dans l'état fermé, la chambre de réaction (2).

13. Récipient sous pression (1) selon l'une quelconque des revendications précédentes, dans lequel le récipient sous pression (1) présente un habillage isolant (3) renfermant la chambre de réaction (2), de préférence pouvant être retiré, qui est constitué de préférence de matière plastique, de PTFE ou de céramique.

14. Récipient sous pression (1) selon l'une quelconque des revendications précédentes, dans lequel le récipient sous pression (1) présente un ensemble de refroidissement (4) entourant la chambre de réaction (2) de telle manière que le récipient sous pression (1) peut être chauffé et refroidi simultanément, dans lequel l'ensemble de refroidissement (4) est de préférence un système de refroidissement par flux traversant, qui présente au moins une entrée (40) et une sortie (41) pour un milieu de refroidissement.
